# EUROPÄISCHE PATENTSCHRIFT

(11) **EP 0 680 541 B1**
(45) Veröffentlichungstag und Bekanntmachung des Hinweises auf die Patenterteilung: **26.08.1998**
(21) Anmeldenummer: 94905673.3
(22) Anmeldetag: 21.01.1994
(51) Int. Cl.: E05F 1/12

(54) **KRAFTSPEICHERFEDERGELENK**
ENERGY STORING SPRING JOINT
JOINT A RESSORT ACCUMULATEUR D'ENERGIE

(30) Priorität: 23.01.1993 DE 9300903 U
(43) Veröffentlichungstag der Anmeldung: 08.11.1995
(73) Patentinhaber: FISCHER, Friedrich, 21037 Hamburg (DE)
(72) Erfinder: FISCHER, Friedrich, 21037 Hamburg (DE)
(74) Vertreter: KUHNEN, WACKER & PARTNER
(86) Internationale Anmeldenummer: EP9400157
(87) Internationale Veröffentlichungsnummer: WO9417271

(56) Entgegenhaltungen:
- DE-A- 3 602 131
- US-A- 3 335 454

## Beschreibung

Die Erfindung betrifft ein Kraftspeichergelenk gemäß dem Oberbegriff des Patentanspruchs 1 wie es aus US-A-3 335 454 bekannt ist.

Das Kraftspeicherfedergelenk ist überall dort einsetzbar, wo zwei Teile zueinander drehend bewegt werden. Dabei kann ein Teil feststehen oder es können sich auch beide Teile gegenläufig oder mit zueinander unterschiedlichen Geschwindigkeiten drehen.

Kraft-, Arbeits- und Energiespeicher sind in den verschiedensten Ausführungsformen bekannt. So sind auch Uhrfederwerke oder Spielzeug-Federmotoren bekannt. Mit diesen kann beispielsweise durch Beaufschlagung durch eine Kraft in den Energiespeicher geladene Energie gespeichert und wieder abgerufen werden.

Diese bekannten Energiespeicher geben die Energie zumeist kontinuierlich oder mit abnehmender Stärke wieder ab. Es gibt jedoch Anwendungsfälle, wo der Einsatz eines Energiespeichers gewünscht wird, der Energie nach Vorgaben und/oder bedarfsorientiert über einen Weg oder zeitbezogen mit unterschiedlicher Stärke wieder abgibt.

Ein besonders geeigneter Einsatzbereich ist bei Scharnieren im Fahrzeugbereich gegeben.

Bei Anhängern von LKW oder im landwirtschaftlichen Bereich sind in den meisten Ausführungsformen Ladeklappen vorgesehen, die mittels einfacher Scharniere am Anhänger angelenkt sind. Die Scharniere sind oftmals an der Unterkante der Ladeklappe vorgesehen, so daß beim Öffnen und Schließen per Hand mitunter erhebliche Kräfte aufgebracht werden müssen, um die Klappe zu bewegen, wobei der Krafteinsatz naturgemäß am größten ist, wenn der Winkel von Ladeklappe zur Senkrechten 90° beträgt.

In der US 3,335,454 ist eines der beiden bewegbaren Teile mit einer als Mitnehmer wirkenden Ausnehmung versehen, über die ein Federende eines Kraftspeichergelenkes während einer Relativbewegung mitgenommen wird, bis es in eine Ausnehmung des anderen Teiles einschnappt, so daß sich an die Spannung der Federn ein Freilauf anschließt, bei dem keine weitere Spannung der Feder während der restlichen Relativbewegung erfolgt. Die auf den Mitnehmer wirkende Kraft während der Relativbewegung ist bei der bekannten Lösung im wesentlichen durch die Federkonstante der Feder und die Auslenkung des Federendes bestimmt.

Demgegenüber liegt der Erfindung die Aufgabe zugrunde, ein Kraftspeichergelenk zu schaffen, das Energie so speichern kann, daß es möglich ist, Energie über einen Bewegungsweg so zu speichern, daß bei einer gegenläufigen oder rückläufigen Bewegung über den Bewegungsweg die Energie in ganz bestimmter Weise abgegeben werden kann.

Diese Aufgabe wird durch die Merkmale des Patentanspruches 1 gelöst.

Durch die Maßnahme, den beiden bewegbaren Teilen eine Führungseinrichtung zur Führung eines Endabschnittes des Energiespeichers zuzuordnen, kann die auf den Mitnehmer wirkende Kraft während der Relativbewegung durch geeignete Ausgestaltung einer Kulisse der Führungseinrichtung beeinflußt werden, so daß sich nahezu beliebige Kraftverläufe einstellen lassen.

Ein wesentlicher Gedanke ist dabei, daß bei der Bewegung von zwei Teilen relativ zueinander entstehende Kräfte wie Gewichtskräfte, Kräfte aufgrund abzubremsender kinetischer Energie usw. abgestützt und im Energiespeicher in Form von potentieller Energie abgespeichert werden. Um die Energie dann auch wieder kontinuierlich abgeben zu können, ist vorgesehen, daß mindestens ein oder zwei voneinander unabhängige Energiespeicher geladen werden. Diese können nacheinander mit potentieller Energie geladen werden, oder es handelt sich um unterschiedliche Energiespeicher, die parallel geladen werden. Beides kann auch kombiniert werden. Wichtig ist, daß über einen Bewegungsablauf eine Energieabgabe, z.B. zur Unterstützung der Bewegung der Teile zueinander möglich ist, und zwar erfindungsgemäß mit einem bestimmten, vorgebbaren Energieabgabeverlauf. Das bedeutet, daß beispielsweise zu Beginn der Bewegung aus dem oder den Energiespeichern nur eine geringe oder eine besonders hohe Energie einer Kraft entnommen wird und anschließend eine Energieentnahme auf einem anderen ggf. wieder wechselnden Energieniveau erfolgt.

Bevorzugterweise ist vorgesehen, daß die Energiespeicher durch Federn gebildet werden. Diese werden erfindungsgemäß entweder so hintereinander geschaltet, daß in ihnen jeweils nacheinander die volle mögliche Energiemenge gespeichert wird, wobei die geladenen Federn in ihrem Ladungszustand bzw. in ihrer Spannung gehalten werden, bis alle Federn beaufschlagt wurden. Ein weiterer Kerngedanke ist dann, daß der oder die Energiespeicher so gegen eine Entladung gesperrt oder blokkiert werden, daß eine weitere Bewegung der beiden Teiler zueinander möglich ist. Es ist daher möglich, dann auch noch eine weitere Bewegung der Teile vorzusehen, bei der keine weitere Energiespeicherung erfolgt. Bei einer Rückbewegung der Teile erfolgt dann die Entspannung zu vorggebbarer Zeit und/ oder Wegpunkten.

Hierbei kann vorgesehen sein, daß mindestens zwei Federn unterschiedliche Federkonstanten oder eine unterschiedliche Feder charakteristisch wie eine progressive oder degressive Änderung der Federkonstanten über den Federweg aufweisen und/oder daß die Energiespeicher bei einer Bewegung der Teile zueinander über einen Gesamtbewegungsweg alle aufladbar und bei einer Bewegung im gegenläufiger Richtung über den Gesamtbewegungsweg alle entladbar sind. Die Federn sind dabei als Zug-, Druck-, Biege- oder Verdrehfedern ausgebildet, und können in ihrer vorspannung einstellbar ausgebildet und abgeordnet sein.

Bei einem Ausführungsbeispiel wird ein Spiralfedersystem geschaffen, das mit mehreren Spiralfedern versehen sind, die unterschiedliche Federkonstanten aufweisen und die beim Herunterklappen der Bordwand freiwerdende Energie speichern, so daß diese zum Hochklappen mit verwandt werden kann, wobei der Einsatzbereich überall dort zu sehen ist, wo zwei miteinander verbundene Teile unter Anwendung von Kraft gegeneinander verschwenkt werden müssen. Es ist allerdings vorteilhaft, wenn in eine Schwenkrichtung die Schwerkraft ausgenutzt werden kann.

Ein derartiges Spiralfedersystem für z.B. ein Klappenscharnier besteht aus einem einseitig geschlossenem Mantelrohr als Mantelhülse, das mit einem Befestigungsmittel versehen ist, das an der Hängerklappe befestigt wird.

Im Mantelrohr als Mantelhülse weist das Klappenscharnier mehrere Spiralfedern auf, durch die eine Achse geführt ist, die am Hänger festgelegt ist. Die Spiralfedern sind auf der Achse ebenfalls festgelegt und finden ihr Widerlager im Anschlagteil des Mitnehmers auf der Innenseite des Mantelrohres. Zwischen Mantelrohr als Mantelhülse und Spiralfeder befindet sich eine Führungshülse, die fest mit dem Hänger verbunden ist und die Führungsschlitze aufweist, wobei je ein freies Ende einer Spiralfeder in einem Führungsschlitz so geführt ist, daß dieses von einem Mitnehmernocken beaufschlagt werden kann. Wird nun die Klappe betätigt, so dreht sich das Mantelrohr und spannt in der Regel nacheinander durch den Mitnehmer die Spiralfedern, deren freies Ende sich dadurch in den Führungsschlitzen der Führungshülse fortbewegen, und zwar in dem zur Achse etwa rechtwinkligen Hauptteil des Führungsschlitzes. Die Führungsschlitze verlaufen im Endbereich in etwa parallel zur Achse. Durch das Verschieben in den Endabschnitt wird das Ende der Spiralfeder aus dem Bereich des Mitnehmers herausgeführt und wird in eine Speicherstellung gebracht, in der sie nicht weiter gespannt werden kann aber die bisherige Spannung beibehalten wird. Der Mitnehmer, der als Wulst teilringartig im Inneren der Mantelhülse umlaufend angeordnet ist, gleitet dann mit dem Anschlagteil an dem in den Endbereich des Führungsschlitzes abgedrängten Ende der Spiralfeder vorbei und das freie Ende wird an einer seitlichen Gleitbahn des Mitnehmers entlanggleitend in seiner Stellung gehalten, auch wenn die Mantelhülse weitergedreht wird. Wird die Bewegung entgegengesetzt ausgeführt, d.h. die Klappe wird geschlossen, rutscht die Feder aus der Speicherposition heraus, wenn das Anschlagteil des Mitnehmers bei der Rückdrehung an dem Ende der Spiralfeder vorbeigedreht worden ist, da sie durch die Ausformung des Endbereiches in den Bereich des Mitnehmernockens drängt, und drückt dann gegen den Anschlagteil des Mitnehmers, wodurch das Schließen unterstützt wird. Die Federkonstanten und die Anordnung von Nocken und Schlitzen werden derart ausgewählt, daß sie den Energieverlauf des Schließens der Klappe angepaßt sind.

Es kann dabei auch vorgesehen werden, daß sich der Mitnehmer über 360° oder mehr an der Innenseite des Mantelrohres erstreckt. In diesem Fall muß der Wulst nicht im rechten Winkel zur Achse, sondern spiralförmig nach Art eines Gewindewulstes verlaufen, wobei die Steigung des Gewindewulstes und die Länge des Endbereichs des Führungsschlitzes so abgestimmt sein müssen, daß bei Erreichen des Endes des Mitnehmerwulstes das freie Ende der Feder sich im Endbereich des Endabschnittes befindet.

Die Anschlagfläche des Anschlagteils weist einen Winkel zur Längserstreckung des Mitnehmers so auf, daß sich das freie Ende der Spiralfeder so anlegt, daß es gleichzeitig an einer Wandung des Führungsschlitzes anliegt und von diesem im Zusammenwirken mit der Anschlagfläche in den Endbereich des Führungsschlitzes geführt wird.

Dieses Spiralfedersystem läßt sich in vielfältiger Weise in allen Bereichen, in denen Spiralfedern benötigt werden, einsetzen, wobei durch die Auswahl der Federkonstanten und die Plazierung der Mitnehmernocken bzw. der Führungsschlitze immer eine individuelle Anpassung möglich ist.

Besonders vorteilhaft ist dabei, daß die Wirkungsrichtung der Energiespeicherung in beide Bewegungsrichtungen durch entsprechende Plazierung der Führungsschlitze und der Spiralfedern ermöglicht wird.

Durch die Auswahl und Einschaltung von Federn mit unterschiedlichen Federkonstanten und sich über den Spannweg ändernden Federkonstanten wird es auch möglich, sich über den Schwenkweg eines Scharniers ergebende unterschiedliche Kräfte, beispielsweise unterschiedliche Gewichtskräfte abzufangen, so daß eine leichte Bewegbarkeit erreicht werden kann.

Weitere vorteilhafte Ausgestaltungen sind in den Unteranspüchen gekennzeichnet.

### Kurze Beschreibung der Zeichnungen

Ein Ausführungsbeispiel der Erfindung wird nachstehend anhand der Zeichnung näher erläutert. Es zeigen
- Fig. 1: in einer teilweise geschnittenen Seitenansicht ein erfindungsgemäßes Spiralfedersystem in Form eines Klappenscharnier,
- Fig. 2: in einem Querschnitt ein erfindungsgemäßes Spiralfedersystem in Form eines Klappenscharnier,
- Fig. 3: eine teilweise geschnittene seitliche Detailansicht einer Spiralfeder mit Führungsschlitz und Mitnehmern in ungespanntem Zustand und
- Fig. 4: eine teilweise geschnittene seitliche Detailansicht der Spiralfeder mit Führungsschlitz und Mitnehmern in gespanntem Zustand.

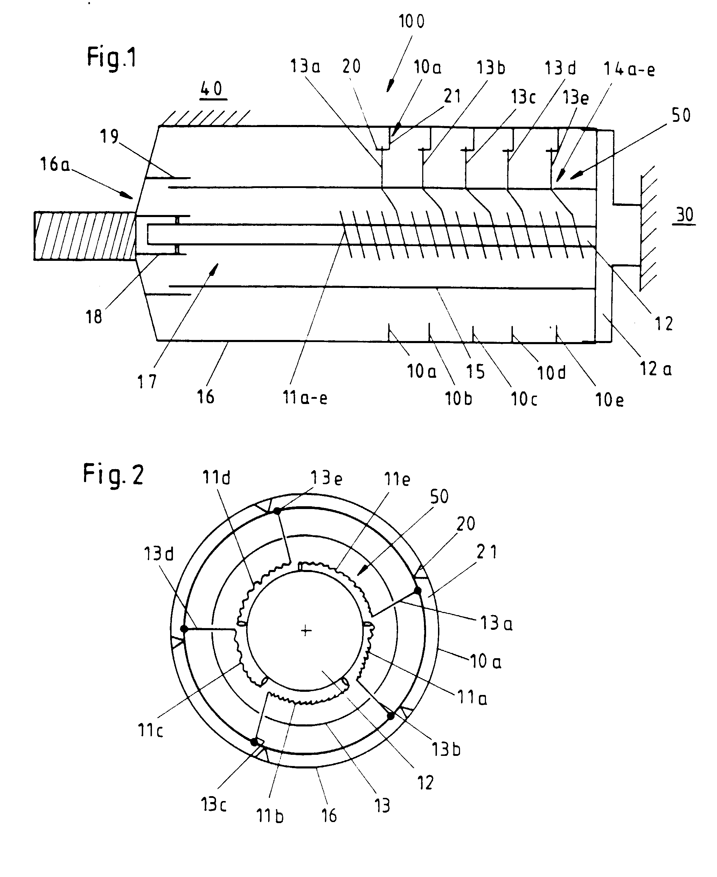

Fig. 1 zeigt ein erfindungsgemäßes Spiralfedersystem in Form eines Klappenscharniers 100 für z.B. Anhänger für LKW, bei dem der einfachheithalber zur Veranschaulichung Mitnehmernocken 10a-e für Spiralfedern 11a-e in einer Ebene dargestellt sind.

Das Klappenscharnier 100 weist eine Achse 12 auf, die an einem in der Zeichnung nur angedeuteten Teil 30, z.B. dem Anhänger, festgelegt ist und die durch mehrere Spiralfedern 11a-e geführt ist und auf der die Spiralfedern 11a-e mit einem Ende festgelegt sind. Die feien Enden 13a-e der Spiralfedern 11a-e sind durch Führungsschlitze 14a-e einer Führungshülse 15 geführt, wobei die Führungshülse 15 in Relation zur Achse 12 unbeweglich ist, da beide über ein Befestigungsmittel 12a miteinander verbunden sind, wobei dieses auch zur Festlegung am Hänger dient. Die Achse 12, Spiralfedern 11a-e und Führungshülse 15 befinden sich in einer einseitig geschlossenen Mantelhülse 16. Die Mantelhülse ist an einem zweiten Teil 40, z.B. der Hängerklappe befestigt.

Auf der geschlossenen Seite 16a befinden sich auf der Innenseite 17 der Mantelhülse 16 eine Führung 18 für die Achse 12 und einem Führungsring 19 für das Führungsrohr 15. Auf der Innenseite 17 der Mantelhülse 16 finden sich die Mitnehmer 10a-e, die auch als Nocken ausgebildet sein können und die bei ein der Drehbewegung der Mantelhülse 16 gegenüber der Achse 12 die freien Enden 13a-e der Spiralfedern 11a-e beaufschlagen.

In Fig. 2 ist das Klappscharnier 100 im Querschnitt dargestellt, um eine mögliche Anordnung der Mitnehmer 10a-e zu zeigen.

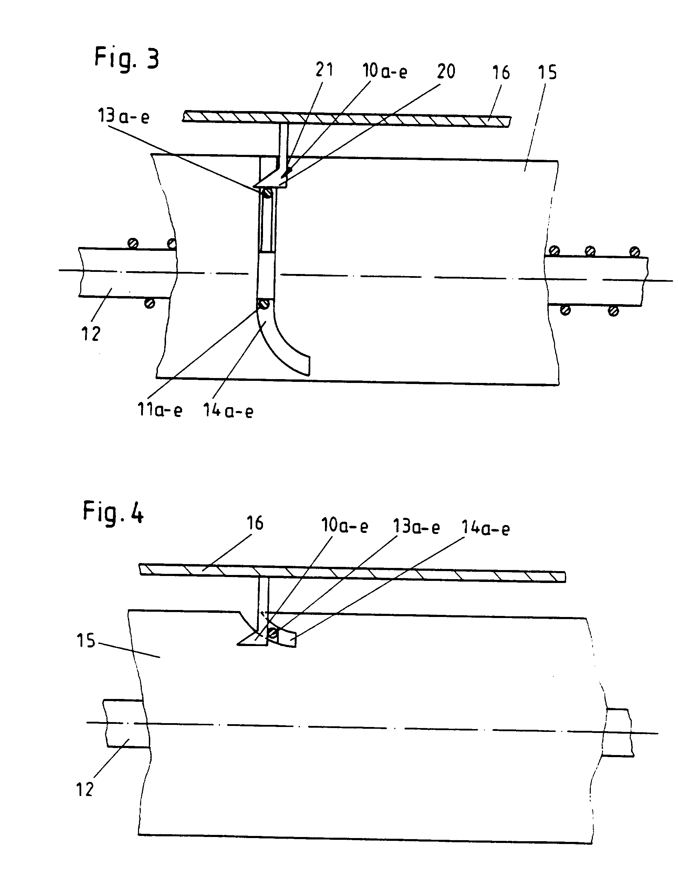

Fig. 3 und 4 verdeutlichen die Arbeitsweise bzw. die Speicherung der Federenergie durch das spezielle Zusammenwirken von Mitnehmer 10a-e und dem Führungsschlitzen 14a-e. Die Führungsschlitze 14a-e verlaufen rechtwinklig zur Achse 12 in der Führungshülse 15, wobei der Endbereich zur Seite nahezu rechtwinklig abknickend ausläuft. Der gerade Abschnitt des Führungsschlitzes 14a-e verläuft deckungsgleich mit dem Weg der Mitnehmer 10a-e für die Spiralfeder 11a-e, während der Endbereich das freie Ende der Spiralfeder 11a-e aus dem Beaufschlagungsbereich des Mitnehmernockens 10a-e herausführt. Beim Drehen der Achse 12 gegenüber der Mantelhülse 16 in Richtung X beaufschlagt jeder Mitnehmer 10a-e ein Ende einer Spiralfeder 11a-e, wodurch diese gespannt wird. Dabei bewegt sich das Ende der Spiralfeder entlang des geraden Abschnittes des Führungsschlitzes und das abgewinkelte Ende wird in eine Position gedreht (Fig. 4), in der die Feder die Energie nicht wieder abgeben kann, da die Spiralfeder 11a-e in dieser Position durch den Führungsschlitz 14a-e und durch die Außenseite des Mitnehmers 10a-e, der auf der Innenseite 17 der Mantelhülse 16 umläuft, fixiert wird.

Außerdem ist vorgesehen, daß die Mitnehmer (10a-e) als auf der Innenseite (17) der Mantelhülse (16) verlaufende wulstartige oder stegartige Teilringe oder Gewinderinge ausgebildet sind, die mit je einem Anschlagteil (20) zur Beaufschlagung des freien Endes (13a-e) einer Spiralfeder (11a-e) und je einer seitlichen Gleitbahn (21) versehen sind. Es ist möglich, den gleichen Grundaufbau zu verwenden und anstelle jedes Mitnehmers in der Mantelhülse eine Führungskulisse in Form eines Führungsschlitzes so auszubilden, daß eine entsprechende Führung des freien Endes der Feder erreicht wird. Auch ist es möglich, die Anordnung in kinematischer Umkehr vorzunehmen. Hierzu können die Federn in der Mantelhülse fest gelagert, das freie abgewinkelte Ende durch den Führungsschlitz in der Führungshülse geführt und der Endbereich im Bereich eines auf der Achse ausgebildeten Mitnehmers oder Führungsschlitzes angeordnet werden. Auch ist es bevorzugterweise möglich, das Gelenk mit nur einer geeignet ausgebildeten Feder auszubilden.

## Patentansprüche

1. Energiespeichereinrichtung (100) zur Verbindung zweier relativ zueinander bewegbarer Teile (30, 40) mit einem mit einem der Teile (30, 40) verbundenen Basisteil (12) und mit einem dem anderen Teil (30, 40) zugeordneten Mantelteil (16), die über zumindest einen Energiespeicher (50) miteinander in Wirkverbindung stehen, wobei ein Endabschnitt in Abhängigkeit von der Relativposition der beiden bewegbaren Teile (30, 40) zueinander von einem Mitnehmer des Mantelteiles (16) oder des Basisteiles (12) mitnehmbar ist, und mit einer mit einem der Teile (12, 16) verbundenen Führungseinrichtung (15) für den Endabschnitt des Energiespeichers (50),
dadurch gekennzeichnet, daß
die Führungseinrichtung (15) eine Kulisse (14a - 14e) hat, die den Endabschnitt im Zusammenwirken mit dem Mitnehmer (20) derart führt, daß sich während der Relativbewegung der Teile (30, 40) ein vorbestimmter, vom Weg abhängiger Kraftverlauf einstellt.

2. Kraftspeichergelenk nach Anspruch 1, dadurch gekennzeichnet, daß jeder Energiespeicher eine Feder (50) ist.

3. Kraftspeichergelenk nach Anspruch 2, dadurch gekennzeichnet, daß mindestens zwei Federn (50) unterschiedliche Federkonstanten aufweisen oder eine unterschiedliche Federcharakteristik, wie beispielsweise eine progressive oder degressive Änderung der Federkonstanten über den Federweg aufweisen.

4. Kraftspeichergelenk nach einem der Ansprüche 1 bis 3, dadurch gekennzeichnet, daß die Energiespeicher (50) bei einer Relativbewegung der Teile (30, 40) nacheinander aufladbar und bei einer Bewegung in gegenläufiger Richtung nacheinander entladbar sind.

5. Kraftspeichergelenk nach einem der Ansprüche 1 bis 3, dadurch gekennzeichnet, daß die Energiespeicher (50) bei einer Relativbewegung der Teile (30, 40) gleichzeitig aufladbar und bei einer Bewegung in gegenläufiger Richtung nacheinander entladbar sind.

6. Kraftspeichergelenk nach einem der Ansprüche 2 bis 5, dadurch gekennzeichnet, daß die Federn (50) als Zug-, Druck-, Biege- oder Verdrehfedern ausgebildet sind.

7. Kraftspeichergelenk nach einem der Ansprüche 2 bis 6, dadurch gekennzeichnet, daß die Federn (50) in ihrer Vorspannung einstellbar ausgebildet und angeordnet sind.

8. Kraftspeichergelenk nach einem der Ansprüche 1 bis 7, dadurch gekennzeichnet, daß das Kraftspeichergelenk (100) als Energiespeicher (50) mindestens zwei Schraubenfedern (11a - 11e) aufweist, durch die eine Achse als Basisteil (12) geführt ist und auf der die Schraubenfedern (11a - 11e) mit einem Ende festgelegt sind, während das andere freie Ende (13a - 13e) der Schraubenfedern (11a - 11e) durch als Kulisse wirkende Führungsschlitze (14a - 14e) einer Führungshülse (15) geführt sind, die die Achse (12) und die Schraubenfedern (11a - 11e) umgibt, wobei die Führungshülse (15) in Relation zur Achse (12) unbeweglich ist, da die Führungshülse (15) und Achse (12) über ein Befestigungsmittel (12a) miteinander verbunden sind, wobei das Befestigungsmittel (12a) auch zur Befestigung an einem der gegeneinander zu bewegenden Teile dient und daß die Achse (12) die Schraubenfedern (11a - 11e) und die Führungshülse (15) sich in dem als einseitig geschlossene hohlzylindrische Mantelhülse (16) ausgebildeten Mantelteil befinden, wobei die verschlossene Seite sich auf der gegenüberliegenden Seite des Befestigungsmittels (12a) befindet, das die Öffnung der Mantelhülse (16) verschließt, ohne fest damit verbunden zu sein, und daß sich auf der Innenseite (17) der geschlossenen Seite (16a) der Mantelhülse (16) eine Führung (18) für die Achse (12) und ein Führungsring (19) für die Führungshülse (15) befindet, während sich im zylindrischen Bereich der Mantelhülse (16) auf der Innenseite (17) sich mindestens zwei Mitnehmer (10a - 10e) befinden, die bei einer Drehbewegung der Mantelhülse (16) gegenüber der Achse (12) die freien Enden (13a - 13e) der Schraubenfedern (11a - 11e) beaufschlagen, und daß die Führungsschlitze (14a - 14e) in einem geraden Abschnitt rechtwinklig zur Achse (12) in der Führungshülse (15) verlaufen, wobei ein Endbereich der Führungsschlitze (14a - 14e) schräg zur Achse (12) angestellt ist und der gerade Abschnitt der Führungsschlitze (14a - 14e) deckungsgleich mit dem Weg der Mitnehmer (10a - 10e) bei einer Verdrehung zwischen Führungshülse (15) und Mantelhülse (16) verläuft, während der Endbereich der Führungsschlitze (14a - 14e) aus dem Beaufschlagungsbereich der Mitnehmer (10a - 10e) herausführt.

9. Kraftspeichergelenk nach Anspruch 8, dadurch gekennzeichnet, daß die Schraubenfedern (11a - 11e) progressiv steigende Federkonstanten aufweisen.

10. Kraftspeichergelenk nach Anspruch 8 oder 9, dadurch gekennzeichnet, daß die Mitnehmer (10a - 10e) und die Führungsschlitze (14a - 14e) auf dem Kreisumfang der Mantelhülse (16) bzw. der Führungshülse (15) verteilt sind.

11. Kraftspeichergelenk nach einem der Ansprüche 8 bis 10, dadurch gekennzeichnet, daß die Endbereiche der Führungsschlitze (14a - 14e) bei den einzernen Führungsschlitzen (14a - 14e) in beliebige Richtungen zeigen.

12. Kraftspeichergelenk nach einem der Ansprüche 8 bis 11, dadurch gekennzeichnet, daß die Mitnehmer (10a - 10e) als auf der Innenseite (17) der Mantelhülse (16) verlaufende wulstartige oder stegartige Teilringe oder Gewinderinge ausgebildet sind, die mit je einem Anschlagteil (20) zur Beaufschlagung des freien Endes (13a - 13e) einer Schraubenfeder (11a - 11e) und je einer seitlichen Gleitbahn (21) versehen sind.

## Claims

1. An energy storing device (100) for connecting two parts (30, 40) which are displaceable relative to each other, comprising a base member (12) connected to one of the parts (30, 40) and a sleeve part (16) allocated to the other part (30, 40), which are in operative connection with each other through at least one energy storage (50), wherein one end portion may be drivingly engaged by a drive member of the sleeve part (16) or of the base member (12) depending on the position of the two displaceable parts (30, 40) relative to each other, and comprising a guide means (15) for the end portion of the energy storage (50) which is connected to one of the parts (12, 16),
characterised in that
the guide means (15) comprises a slide path arrangement (14a - 14e) guiding the end portion in cooperation with the drive member (20) in such a manner that a predetermined development of force which is dependent on the path occurs during the relative displacement of the parts (30, 40).

2. An energy storing joint according to claim 1,
characterised in that each energy storage is a spring (50).

3. The energy storing joint according to claim 2,
characterised in that at least two springs (50) have different spring constants or different spring characteristics, such as e.g. a progressive or degressive variation of the spring constants along the spring path.

4. The energy storing joint according to one of claims 1 to 3, characterised in that the energy storages (50) are capable of being charged consecutively in the case of a relative displacement of the parts (30, 40), and are capable of being discharged consecutively in the case of a displacement in an opposite direction.

5. The energy storing joint according to one of claims 1 to 3, characterised in that the energy storages (50) are capable of being charged concurrently in the case of a relative displacement of the parts (30, 40) and are capable of being discharged consecutively in the case of displacement in an opposite direction.

6. The energy storing joint according to one of claims 2 to 5, characterised in that the springs (50) have the form of tension springs, pressure springs, spiral springs, or torsion springs.

7. The energy storing joint according to one of claims 2 to 6, characterised in that the springs (50) are formed and arranged such as to be adjustable with respect to their bias.

8. The energy storing joint according to one of claims 1 to 7, characterised in that the energy storing joint (100) comprises as an energy storage (50) at least two coil springs (11a - 11e) through which a shaft is guided as a base member (12) and on which the coil springs (11a - 11e) are immobilised with one end thereof, whereas the other free ends (13a - 13e) of the coil springs (11a - 11e) are guided by the guide slots (14a - 14e) acting as a slide path arrangement of a guide sleeve (15) which surrounds the shaft (12) and the coil springs (11a - 11e), the guide sleeve (15) being immovable in relation to the shaft (12) inasmuch as the guide sleeve (15) and shaft (12) are connected to each other through a fastening means (12a), with the fastening means (12a) moreover serving for fastening to one of the parts to be moved relative to each other, and in that the shaft (12), the coil springs (11a - 11e), and the guide sleeve (15) are located inside the sleeve part which is designed as a hollow cylindrical enclosure sleeve (16) closed on one side, wherein the closed side is located on the opposite side of the fastening means (12a) which closes the opening of the enclosure sleeve (16) without being fixedly connected thereto, and in that on the inside (17) of the closed side (16a) of the enclosure sleeve (16) there are a guide (18) for the shaft (12) and a guide ring (19) for the guide sleeve (15), whereas in the cylindrical range of the enclosure sleeve (16) on the inside (17) there are at least two drive members (10a - 10e) which, in the case of a rotating movement of the enclosure sleeve (16) relative to the shaft (12), act on the free ends (13a - 13e) of the coil springs (11a - 11e), and in that the guide slots (14a - 14e) extend in a linear portion orthogonally to the shaft (12) in the guide sleeve (15), with an end portion of the guide slots (14a - 14e) being arranged obliquely with respect to the shaft (12) and the linear portion of the guide slots (14a - 14e) extending in congruent relationship with the paths traversed by the drive members (10a - 10e) in the case of a rotation between guide sleeve (15) and enclosure sleeve (16), whereas the end portion of the guide slots (14a - 14e) leads out of the range of action of the drive members (10a - 10e).

9. The energy storing joint according to claim 8, characterised in that the coil springs (11a - 11e) have progressively increasing spring constants.

10. The energy storing joint according to claim 8 or 9, characterised in that the drive members (10a - 10e) and the guide slots (14a - 14e) are distributed on the circular periphery of the enclosure sleeve (16) and of the guide sleeve (15), respectively.

11. The energy storing joint according to one of claims 8 to 10, characterised in that the end regions of the guide slots (14a - 14e) are oriented in optional directions in the single guide slots (14a - 14e).

12. The energy storing joint according to one of claims 8 to 11, characterised in that the drive members (10a - 10e) have the form of rim-type or rib-type partial rings or threaded rings extending on the inside (17) of the enclosure sleeve (16), each of which are provided with one impact member (20) for acting on the free end (13a - 13e) of a coil spring (11a - 11e) and one lateral sliding path (21).

## Revendications

1. Dispositif accumulateur d'énergie (100) pour relier deux parties mobiles l'une par rapport à l'autre (30, 40), comportant une partie de base (12) reliée à l'une des parties (30, 40) et une partie de chemise (16) associée à l'autre partie (30, 40), qui sont reliées entre elles pour coopérer par au moins un accumulateur d'énergie (50), une section d'extrémité pouvant être entraînée en fonction de la position relative des deux parties mobiles (30, 40) l'une par rapport à l'autre par un dispositif entraîneur de la partie de chemise (16) ou de la partie de base (12), et comportant par ailleurs un dispositif de guidage (15) raccordé à l'une des parties (12, 16) pour la section d'extrémité de l'accumulateur d'énergie (50),
caractérisé en ce que
le dispositif de guidage (15) présente une coulisse (14a à 14e) qui guide la section d'extrémité en coopérant avec le dispositif entraîneur (20) de sorte que pendant le mouvement relatif des parties (30, 40) une chaîne cinématique prédéterminée dépendant de la course se règle.

2. Joint accumulateur d'énergie selon la revendication 1, caractérisé en ce que chaque accumulateur d'énergie est un ressort (50).

3. Joint accumulateur d'énergie selon la revendication 2, caractérisé en ce qu'au moins deux ressorts (50) présentent des constantes de rappel différentes ou une caractéristique élastique différente telle que par exemple une modification progressive ou dégressive de la constante de rappel sur la course du ressort.

4. Joint accumulateur d'énergie selon l'une quelconque des revendications 1 à 3, caractérisé en ce que les accumulateurs d'énergie (50) peuvent être successivement chargés lors d'un mouvement relatif des parties (30, 40) et déchargés successivement lors d'un mouvement en sens contraire.

5. Joint accumulateur d'énergie selon l'une quelconque des revendications 1 à 3, caractérisé en ce que les accumulateurs d'énergie (50) peuvent être simultanément chargés lors d'un mouvement relatif des parties (30, 40) et déchargés successivement lors d'une mouvement en sens contraire.

6. Joint accumulateur d'énergie selon l'une quelconque des revendications 2 à 5, caractérisé en ce que les ressorts (50) sont formés en tant que ressorts de traction, de pression, de flexion ou de torsion.

7. Joint accumulateur d'énergie selon l'une quelconque des revendications 2 à 6, caractérisé en ce que les ressorts (50) sont formés et disposés de manière à pouvoir être réglés dans leur précontrainte.

8. Joint accumulateur d'énergie selon l'une quelconque des revendications 1 à 7, caractérisé en ce que le joint accumulateur d'énergie (100) présente comme accumulateur d'énergie (50) au moins deux ressorts cylindriques (11a à 11e) à travers lesquels un axe est guidé en tant que partie de base (12) et sur lequel les ressorts cylindriques (11a à 11e) sont fixés par une extrémité, alors que l'autre extrémité libre (13a à 13e) des ressorts cylindriques (11a à 11e) est guidée à travers des fentes de guidage (14a à 14e) d'une douille de guidage (15) agissant comme coulisse, laquelle douille de guidage entoure l'axe (12) et les ressorts cylindriques (11a à 11e), la douille de guidage (15) étant immobile par rapport à l'axe (12) vu que la douille de guidage (15) et l'axe (12) sont reliés entre eux par un moyen de fixation (12a), le moyen de fixation (12a) servant aussi à la fixation à l'une des parties réciproquement mobiles et que l'axe (12), les ressorts cylindriques (11a à 11e) et la douille de guidage (15) se trouvent dans la partie de chemise formée comme douille chemise (16) cylindrique creuse fermée d'un côté, le côté fermé se trouvant sur le côté opposé du moyen de fixation (12a) qui ferme l'ouverture de la douille chemise (16) sans y être raccordée de manière ferme, et que sur le côté intérieur (17) du côté fermé (16a) de la douille chemise (16) se trouve un guidage (18) pour l'axe (12) et une bague de guidage (19) pour la douille de guidage (15), alors que dans la zone cylindrique de la douille chemise (16) sur le côté intérieur (17) se trouvent au moins deux dispositifs entraîneurs (10a à 10e) qui exercent une pression sur les extrémités libres (13a à 13e) des ressorts cylindriques (11a à 11e) lors d'un mouvement rotatif de la douille chemise (16) par rapport à l'axe (12) dans la douille de guidage (15), et que les fentes de guidage (14a à 14e) s'étendent dans une section droite à angle droit par rapport à l'axe (12), une zone d'extrémité des fentes de guidage (14a à 14e) étant positionnée obliquement par rapport à l'axe (12) et la section droite des fentes de guidage (14a à 14e) s'étendant en convergeant avec la course du dispositif entraîneur (10a à 10e) lors d'un pivotement entre la douille de guidage (15) et la douille chemise (16) alors que la zone d'extrémité des fentes de guidage (14a à 14e) mène vers l'extérieur de la zone sujette à l'action des dispositifs entraîneurs (10a à 10e).

9. Joint accumulateur d'énergie selon la revendication 8, caractérisé en ce que les ressorts cylindriques (11a à 11e) présentent des constantes de rappel progressivement ascendantes.

10. Joint accumulateur d'énergie selon les revendications 8 ou 9, caractérisé en ce que les dispositifs entraîneurs (10a à 10e) et les fentes de guidage (14a à 14e) sont répartis sur la circonférence de la douille chemise (16) ou de la douille de guidage (15).

11. Joint accumulateur d'énergie selon l'une quelconque des revendications 8 à 10, caractérisé en ce que les zones d'extrémité des fentes de guidage (14a à 14e) des diverses fentes de guidage (14a à 14e) pointent dans des directions quelconques.

12. Joint accumulateur d'énergie selon l'une quelconque des revendications 8 à 11, caractérisé en ce que les dispositifs entraîneurs (10a à 10e) sont formés sur le côté intérieur (17) de la douille chemise (16) comme segments ou bagues filetées à la manière d'un bourrelet ou d'une nervure, qui présentent chacun une partie de butée (20) pour exercer une pression sur l'extrémité libre (13a à 13e) d'un ressort cylindrique (11a à 11e) et une glissière latérale (21).
